# FASCICULE DE BREVET EUROPEEN

(11) **EP 0 402 212 B1**
(45) Date de publication et mention de la délivrance du brevet: **10.08.1994**
(21) Numéro de dépôt: 90401479.2
(22) Date de dépôt: 01.06.1990
(51) Int. Cl.: C08G 18/79, C08G 18/73, C08G 18/74, C08G 18/42, C08G 18/48, C09D 175/06, C09D 175/08, B32B 17/10

(54) **Procédé pour la fabrication d'une couche de polyuréthane autocicatrisable,et produit obtenu**
Verfahren zur Herstellung einer selbstheilenden Polyurethan- Beschichtung und erhaltenes Produkt
Process for the fabrication of a self-healing polyurethane film and obtained product

(30) Priorité: 05.06.1989 FR 8907375
(43) Date de publication de la demande: 12.12.1990
(73) Titulaire: SAINT-GOBAIN VITRAGE INTERNATIONAL, 92400 Courbevoie (FR)
(72) Inventeur: Muller, René M., F-91330 Yerres (FR); Daude, Gérard M., F-33140 Villenave D'Ornon (FR)
(74) Mandataire: Muller, René

(56) Documents cités:
- EP-A- 0 083 017
- EP-A- 0 132 057
- EP-A- 0 236 201
- EP-A- 0 285 859
- FR-A- 2 574 396

## Description

La présente invention concerne la fabrication d'une couche de polyuréthane de haute qualité optique, pouvant être utilisée dans la fabrication des vitrages feuilletés de sécurité,et en particulier la fabrication d'une couche de polyuréthane thermodurcissable ayant des propriétés de résistance à la rayure et à l'abrasion, qui peut être utilisée comme couche de recouvrement d'un support rigide monolithique ou feuilleté en verre et/ou en matière plastique rigide, tel le polycarbonate, le polyméthacrylate de méthyle, ou comme couche de recouvrement d'une couche plus souple, par exemple, une couche en polyuréthane présentant des propriétés d'absorbeur d'énergie, une couche en polyester, ces couches étant elles-mêmes en contact avec le support rigide.

Une couche de recouvrement de ce type est par exemple décrite dans les publications de brevets français 2 187 719, 2 251 608 ou 2 574 396. Cette couche dite aussi autocicatrisable est à base d'un polyuréthane thermodurcissable et elle a dans les conditions normales de température, une haute capacité de déformation élastique, un faible module d'élasticité, inférieur à 2000 DaN/cm² et un allongement à la rupture de plus de 60 % avec moins de 2 % de déformation plastique. Un polyuréthane thermodurcissable particulièrement préféré est celui décrit dans la publication de brevet français 2 251 608.

Pour fabriquer une couche de ce type, on utilise généralement un procédé par coulée réactive, c'est-à-dire un procédé dans lequel on forme la couche de polyuréthane thermodurcissable à partir d'un mélange homogène des composants réactionnels que l'on coule en continu sur un support, généralement un support plan et en verre qui défile sous le dispositif de coulée. Un procédé de coulée réactive est décrit par exemple dans la publication de brevet français 2 442 128. Les composants qui forment le mélange réactionnel à couler sont d'une part : un composant polyol, généralement un polyétherpolyol ou un polyester polyol d'une fonctionnalité supérieure à 2, généralement de 3 ou entre 2 et 3, et d'autre part un composant isocyanate qui peut être choisi parmi les biurets ou les triisocyanurates du 1,6-hexanediisocyanate, ce composant présentant une fonctionalité de 3.

Le procédé par coulée réactive du mélange des deux composants décrits ci-dessus procure une couche d'excellent qualité optique et qui présente les propriétés désirées tels que résistance à la rayure, à l'abrasion, aux agents extérieure, aux solvants.

Néanmoins, cette coulée réactive ne donne entière satisfaction que pour des épaisseurs de couches supérieures généralement à 200 µm.

Pour des épaisseurs plus faibles, de l'ordre de 100 µm et moins, alors que les propriétés mécaniques conviennent généralement, la qualité optique de la couche obtenue, en revanche, n'est pas toujours satisfaisante.

Pour fabriquer des couches de polyuréthane thermodurcissable avec de faibles épaisseurs, notamment inférieures à 300 µm, on a proposé un procédé de pulvérisation réactive. Dans ce cas le mélange réactionnel n'est plus coulé à l'aide d'une tête de coulée, mais pulvérisé, par exemple à l'aide d'un dispositif à bol tournant à grande vitesse comme décrit par exemple dans la publication de brevet européen 0 161 184 ; mais là encore la qualité optique obtenue n'est pas toujours satisfaisante pour des couches d'épaisseur de l'ordre de 100 µm et moins.

L'invention propose un nouveau procédé de fabrication d'une couche de polyuréthane par coulée réactive ou pulvérisation réactive qui obvie aux inconvénients cités en permettant notamment la fabrication d'une couche de polyuréthane thermodurcissable autocicatrisable, de bonne qualité optique, même pour des épaisseurs inférieures à 100 µm.

Dans le document EP-A-132 057 on décrit une méthode pour préparer une composition polymérique pulvérisable formée à partir d'un composant A et d'un composant B, le composant A comprenant un prépolymère dérivé de 60 à 100 parties de méthylène diisocyanate (MDI) et de 0 à 40 parties d'un polyéthertriol.

Selon le procédé de l'invention, on ne dépose plus sur le support de formation de la couche un mélange réactionnel des composants ayant la fonctionnalité nécessaire et bien connue de l'homme de métier pour l'obtention d'une couche de polyuréthane thermodurcissable, en l'occurence une fonctionnalité de 3 pour le composant isocyanate,mais selon l'invention, on dépose par coulée ou pulvérisation sur le support un mélange du composant polyol et du composant isocyanate qui est essentiellement un diisocyanate ou un mélange de diisocyanates monomères, c'est-à-dire d'une fonctionnalité de 2, choisi parmi le 1,6-hexaméthylènediisocyanate, le 3-isocyanatométhyl-3,5,5-triméthylcyclohexyl-diisocyanate, le m-tétraméthylxylylènediisocyanate, le 2,2,4-triméthyl-6-hexanediisocyanate, et on effectue la trimérisation de l'isocyanate sur le support de formation de la couche, ainsi que la réaction de polymérisation du polyuréthane par action de la chaleur. La trimérisation est effectuée avantageusement simultanément ou juste avant la réaction de polymérisation.

La trimérisation in situ, selon l'invention, de l'isocyanate, permet de façon surprenante la fabrication d'une couche ayant toutes les qualités requises pour une utilisation dans les vitrages de sécurité. Connaissant les difficultés de fabrication d'une couche de haute qualité optique à partir d'un mélange réactionnel et très homogène des composants présentant la fonctionnalité adaptée, c'est à dire une fonctionnalité de 3 pour le composant isocyanate pour l'obtention du produit final désiré, c'est-à-dire un polyuréthane thermodurcissable, il n'était pas envisageable par l'homme de métier de prévoir dans un procédé de fabrication d'une couche de haute qualité optique par coulée réactive, une réaction supplémentaire, source d'hétérogénéité de la couche, susceptible d'entraîner des défauts optiques irrémédiables.

La couche de revêtement obtenu par le procédé selon l'invention peut être utilisée pour la fabrication de feuilles en matière plastique de haute qualité optique et en particulier pour les vitrages comprenant un support en verre ou en matière plastique, monolithique ou feuilleté.

La trimérisation in situ selon l'invention peut être une cyclotrimérisation avec formation d'un triisocyanurate selon le schéma suivant dans le cas du monomère 1,6 - hexaméthylènediisocyanate : 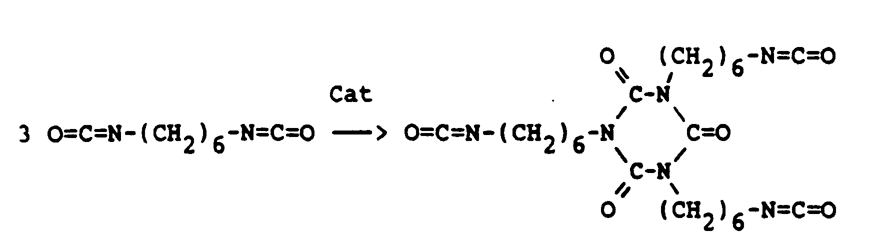
Outre, le 1,6-hexaméthylènediisocyanate, cité ci-dessus, d'autres diisocyanates monomères peuvent être utilisés dans le cadre du procédé selon l'invention. Ce sont des diisocyanates aptes à former à partir d'un seul type de monomères ou d'un mélange de monomères, des triisocyanurates ou des biurets d'isocyanate comme indiqués par la suite.

On peut citer le 3 - isocyanatométhyl - 3,5,5 - triméthylcyclohexyldiisocyanate (IPDI), le m-tétraméthyl xylylènediisocyanate (m-TMXDI), le 2,2,4 - triméthyl - 6 - hexanediisocyanate (TMDI).

Pour effectuer la cyclotrimérisation du 1,6-hexaméthylènediisocyanate in situ, on peut utiliser les catalyseurs connus pour la réaction de cyclotrimérisation en réacteur, par exemple des catalyseurs organométalliques, des hydroxydes ou des sels d'acides organiques d'ammonium quaternaire, des bases fortes telles l'acétate de potassium, l'octoate de potassium.

Les quantités de catalyseurs peuvent varier selon le type de catalyseures. On choisit généralement un taux de catalyseur compris entre 0,01 et 5 % exprimé en poids par rapport au poids du diisocyanate dans le mélange réactionnel.

Un catalyseur particulièrement adapté à la trimérisation in situ du 1,6-hexaméthylènediisocyanate est un sel d'ammonium quaternaire, par exemple le produit commercialisé sous l'appellation Dabco TMR.

Selon une variante de l'invention, la trimérisation in situ peut être une réaction de biurétisation du diisocyanate monomère, notamment du 1,6-hexaméthylènediisocyanate, en présence d'agents de biurétisation telles des amines aliphatiques primaires, secondaires ou tertiaires, procurant des biurets d'isocyanate de faible viscosité.

Le composant polyol utilisé dans le procédé selon l'invention peut être celui connu et utilisé pour la fabrication des couches de polyuréthannes thermodurcissables décrites dans les publications de brevets déjà citées tel que les FR 2 187 719, 2 251 608 et 2 574 396.

Ce composant polyol peut être choisi parmi les polyétherpolyols, les polyesterpolyols obtenus par réaction d'alcools polyfonctionnels, comme le 1,2,3-propanetriol (glycérol), le 2,2-bis (hydroxyméthyl)-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propane diol (pentaérythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane, ou encore les poly (ε- caprolactone) polyols. Le poids moléculaire des polyols ramifiés est avantageusement d'environ 250 à 4000 et de préférence d'environ 450 à 2000.

Le composant polyol est avantageusement choisi parmi les composants polyol formés esentiellement d'un polyol de fonctionnalité supérieure à 2, et de préférence trifonctionnel.

Le composant polyol préféré est choisi parmi un polyétherpolyol d'un poids moléculaire d'environ 450, obtenu par condensation d'oxide de 1,2-propylène avec du 2,2-bis (hydroxyméthyl)-1-butanol et ayant une teneur en radicaux hydroxyles libres d'environ 10,5 à 12 % en poids, un polyesterpolyol faiblement ramifié à base de triméthylolpropane, de 1,6-hexanediol, d'acide adipique et d'acide o-et i-phatique, ayant une teneur en radicaux OH de 3 à 5 % en poids, un lactonepolyesterpolyol trifonctionnel à base de triméthylolpropane ou de glycérol et d'ε-caprolactone ayant une teneur en radicaux OH de 8 à 12 % en poids environ.

Outre le catalyseur de la réaction de trimérisation in situ, le mélange réactionnel utilisé selon l'invention contient avantageusement un second catalyseur, spécifique à la réaction de formation du polyuréthane par condensation entre le triisocyanate formé in situ et le composant polyol. Ce catalyseur est par exemple un composé organo-métallique, notamment un organo-étain tel que le dilaurate de dibutylétain.

Pour s'assurer de la trimérisation du diisocyanate préalablement à la réaction avec le polyol, on utilise généralement une quantité de catalyseur spécifique à la trimérisation plus importante que la quantité de catalyseur propre à la réaction de formation du polyuréthane. Ainsi, la quantité de catalyseur spécifique à trimérisation peut être avantageusement plus de 10 fois supérieure à la quantité de catalyseur propre à la réaction de polymérisation.

Les quantités de diisocyanate d'une part, et de polyol d'autre part, dans le mélange réactionnel, sont calculées de préférence pour avoir un rapport final NCO/OH compris entre 0,7 et 1,2.

Un autre avantage du procédé selon l'invention est que la réaction de trimérisation utilise les conditions de température utilisées dans la fabrication connue d'une couche de polyuréthane par coulée réactive du mélange réactionnel des composants de fonctionnalité supérieure à 2. C'est-à-dire que le mélange réactionnel est coulé à une température généralement inférieure à 80°C sur un support lui-même proté à une température inférieure à 80°C, la couche formée sur le support de coulée étant ensuite porté à une température de l'ordre de 100 à 140°C pour la polymérisation.

Du fait de la faible viscosité du mélange réactionnel que l'on coule ou que l'on pulvérise selon l'invention, on peut obtenir par ce procédé des couches de polyuréthane autocicatrisable, de bonnes qualités optiques, de quelques dizaines de microns d'épaisseur seulement mais aussi jusqu'à des épaisseurs pouvant aller jusqu'à plusieurs centaines de microns.

Le support de formation de la couche sur lequel est effectué la trimérisation est avantageusement un support continu en verre, ou une bande continue métallique, ou encore un ruban souple tendu tels que ceux décrits dans les publications de brevets européens 0 038 760 et 0 131 483, revêtues le cas échéant au préalable d'un agent de séparation comme décrit par exemple dans la publication de brevet français 2 383 000.

D'autres caractéristiques et avantages de l'invention apparaitront dans les exemples suivants :

### EXEMPLE 1

Sur un support en verre mobile défilant de manière continue, revêtu d'un agent de séparation qui peut être par exemple celui décrit dans la publication de brevet français 2383000, à savoir un produit d'addition modifié d'éthylène oxyde, on coule un mélange homogène des composés suivants :
- 1000 g d'un polyéther d'un poids moléculaire d'environ 450 obtenu par condensation d'oxyde de 1,2-propylène avec du 2,2-bis-(hydroxyméthyl)-1-butanol et ayant une teneur en radicaux hydroxyles libres d'environ 10,5 à 12 % contenant 0,5 % en poids d'un stabilisant 0,75 % en poids d'un sel d'ammonium quaternaire utilisé en tant que catalyseur pour la trimérisation du diisocyanate, 0,025 % en poids d'un catalyseur pour la réaction de polymérisation du polyuréthane, à savoir du dilaurate de dibutylétain et 0,05 % en poids d'un agent nappant,
- 880 g de 1,6 -hexaméthylènediisocyanate.

Le rapport final NCO/OH théorique est de 0,8.

Pour l'apport du mélange, on utilise une tête de coulée telle que celle décrite dans la publication de brevet français 2347170. On forme une couche uniforme de 0,1 mm d'épaisseur sur le support de coulée qui est à une température d'environ 40°C à l'emplacement de la coulée. On élève ensuite la température de la couche jusqu'à environ 80°C pour effectuer la trimérisation du composant isocyanate durant 5 minutes environ, suivie d'une nouvelle élévation de la température à 120°C environ pendant 15 minutes environ pour la polymérisation de la couche de polyuréthane. Le traitement thermique à une durée totale d'environ 20 minutes. La couche obtenue est transparente et présente une bonne qualité optique. Cette couche montre des propriétés de résistance à la rayure et à l'abrasion ainsi que des caractéristiques de résistance mécanique telles que résistance à la rupture et l'allongement à la rupture, comme indiqués ci-après, comparables à celles d'une couche fabriquée comme décrit par exemple dans la publication de brevet français 2251608 par coulée du mélange des composants trifonctionnels.

### EXEMPLE 2

On opère comme dans l'exemple 1 pour couler un mélange homogène des composés suivants :
- 942 g d'une polycaprolactone trifonctionnelle à base de triméthylolpropane et d'ε -caprolactone ayant une teneur en radicaux libres de 9,3 % en poids, contenant 0,5 % en poids d'un stabilisant, 0,75 % en poids d'un sel d'ammonium quaternaire utilisé en tant que catalyseur pour la trimérisation, 0,025 % en poids d'un catalyseur pour la réaction de polymérisation, à savoir du dilaurate de dibutylétain et 0,05 % en poids d'un agent nappant,
- 1000 g de 1,6-hexaméthylènediisocyanate.

Le rapport final NCO/OH théorique étant de 1.

On forme une couche de 0,1 mm d'épaisseur. La couche est porté à une température de 120°C pendant 20 minutes.

La couche obtenue présente une bonne qualité optique et des propriétés mécaniques, comme indiquées ci-après, la rendant apte à une utilisation comme couche de revêtement dans les vitrages de sécurité.

### EXEMPLE 3

On opère comme dans l'exemple 2, sauf qu'on forme une couche de 0,3 mm d'épaisseur.

Après polymérisation la couche obtenue présente une bonne qualité optique.

### EXEMPLE TEMOIN

On prépare un mélange réactionnel en mélangeant 1000 g d'un polyisocyanate trifonctionnel formé d'isocyanurate à base de 1,6-hexaméthylènediisocyanate ayant une teneur en groupements NCO libres de 21,5 % en poids, avec 942 g d'une polycaprolactione trifonctionnelle ayant une teneur en groupements OH libres de 9,3 % en poids. Le rapport NCO/OH est ainsi de 1. On ajoute au préalable à la polycaprolactone, 0,015 % en poids par rapport au poids de la polycaprolactone, de dilaurate de dibutylétain en tant que catalyseur.

Le mélange réactionnel est déposé sur le support de coulée comme dans l'exemple 1 pour former une couche de 0,1 mm d'épaisseur.

On élève la température jusqu'à 120°C pendant 15 minutes pour effectuer la polymérisation de la couche de polyuréthane.

La couche obtenue est de moins bonne qualité optique que dans les exemples précédents.

On observe des stries (ce qui n'est pas le cas lorsque la couche est plus épaisse). Le test d'abrasion est alors non significatif.

Après la polymérisation des couches de revêtement préparées ci-dessus et après les avoir retirées du support de formation, on détermine leurs propriétés mécaniques en mesurant sur les feuilles la résistance en traction, et l'allongement en traction suivant la norme DIN 53455. On détermine en outre la résistance à l'abrasion suivant la norme européenne ECE R-43 et la résistance à la rayure suivant la méthode Erichsen sur les couches de polyuréthane adhérant aux supports en verre. Lors de la détermination de la résistance à la rayure suivant la méthode Erichsen, on utilise un montage expérimental tel que décrit dans la norme DIN 53799, sauf que le diamant de rayage conique utilisé présente un angle conique de 50 degrés et un rayon de courbure de 15 µm au sommet du cône. Pour l'évaluation de la résistance à la rayure, on indique le poids de sollicitation le plus élevé du diamant de rayage pour lequel aucune lésion visible permanente de la surface n'est identifiable.

L'évaluation de l'état de surface des couches de polyuréthane est effectuée par vois visuelle.

Les résultats des mesures mécaniques sont rassemblés dans le tableau 1 ci-après. Le tableau 1 indique de plus, pour les différentes propriétés mécaniques, les intervalles dans lesquels les valeurs mesurées doivent si situer pour que la couche de polyuréthane ait le caractère autocicatrisable et puisse satisfaire aux conditions d'utilisation dans des vitrages de sécurité.

La couche de revêtement obtenue par le procédé selon l'invention peut être utilisée dans les vitrages de sécurité, seule ou en étant associée à une couche de polyuréthane présentant des propriétés d'absorbeur d'énergie pour former une feuille à deux couches comme décrit par exemple dans les publications de brevets européens 0 132 198 et 0 133 090.

**TABLEAU 1**

| | résistance à la rupture N/mm² | allongem. en traction % | abrasion % | résistance à la rayure (g) |
|---|---|---|---|---|
| Valeurs limites de l'intervalle requis | 5 - 40 | > 60 | < 4 | > 10 |
| Exemple 1 | 15,7 | 90 | 3,8 | 30 |
| Exemple 2 | 13,7 | 85 | 2,4 | 35 |
| Exemple 3 | 14,1 | 85 | 2,3 | 34 |
| Ex. témoin | 24 | 115 | | 24 |

## Revendications

1. Procédé pour la fabrication d'une couche de revêtement en polyuréthane thermodurcissable ayant des propriétés d'autocicatrisation, par coulée réactive ou pulvérisation réactive d'un mélange réactionnel d'un composant polyol d'une fonctionnalité au moins égale à 2 et d'un composant isocyanate, sur un support de formation, caractérisé en ce que le composant isocyanate est essentiellement un diisocyanate ou un mélange de diisocyanates sous forme de monomères, choisis parmi le 1,6 - hexaméthylènediisocyanate, le 3 - isocyanatométhyl - 3,5,5 - triméthylcyclohexyldiisocyanate, le m-tétraméthyl xylylènediisocyanate, le 2,2,4-triméthyl-6-hexanediisocyanate, aptes à former un trimère d'isocyanate par une réaction de trimérisation en présence d'un catalyseur spécifique, que le mélange réactionnel contenant un catalyseur de trimérisation est déposé par coulée ou pulvérisation sur le support de formation de la couche, et qu'on effectue la réaction de trimérisation sur ledit support, ainsi que la polymérisation de la couche de polyuréthane, par action de la chaleur.

2. Procédé selon la revendication 1, caractérisé en ce que la trimérisation est effectuée simultanément ou juste avant la réaction de polymérisation de la couche.

3. Procédé selon une des revendications 1 à 2, caractérisé en ce que le catalyseur de trimérisation est un catalyseur procurant un triisocyanurate.

4. Procédé selon une des revendications 1 ou 2, caractérisé en ce que le catalyseur de trimérisation est un catalyseur procurant un biuret d'isocyanate.

5. Procédé selon une des revendications 1 à 4, caractérisé en ce que l'isocyanate monomère est le 1,6-hexaméthylènediisocyanate.

6. Procédé selon la revendication 3, caractérisé en ce que le catalyseur de trimérisation est choisi parmi les catalyseurs organométalliques, des sels d'acide organiques d'ammonium quaternaire, des bases fortes.

7. Procédé selon une des revendications 1 à 6, caractérisé en ce que le composant polyol est formé essentiellement d'un polyol de fonctionnalité supérieure à 2, et de préférence trifonctionnel.

8. Procédé selon une des revendications 1 à 7, caractérisé en ce que le mélange réactionnel contient en outre un catalyseur organo-métallique propre à la réaction de polymérisation du polyuréthane.

9. Procédé selon la revendication 8, caractérisé en ce que la concentration en poids du catalyseur de trimérisation du mélange réactionnel est au moins dix fois celle du catalyseur de polymérisation.

10. Procédé selon une des revendications 1 à 9, caractérisé en ce que le composant polyol est choisi parmi un polyéther obtenu par condensation d'oxyde de 1,2 propylène avec du 2,2-bis (hydroxyméthyl)-1-butanol, un polyesterpolyol à base de triméthylolpropane, d'hexanediol, d'acide adipique et d'acide o- et i-phtalique, un lactonepolyesterpolyol trifonctionnel, à base de triméthylolpropane ou de glycérol et de ε -caprolactone.

11. Procédé pour la fabrication d'une feuille à deux couches, une couche de polyuréthane présentant des propriétés d'absorbeur d'énergie obtenue par coulée réactive et une couche de revêtement en polyuréthane thermodurcissable, dans lequel on forme la couche de revêtement en premier sur un support de formation et on forme l'autre couche sur la première, ou inversement on forme d'abord l'autre couche de polyuréthane puis la couche de revêtement, caractérisé en ce que le composant isocyanate est essentiellement un diisocyanate ou un mélange de diisocyanate sous forme de monomères, choisis parmi le 1,6 - hexaméthylènediisocyanate, le 3 -isocyanatométhyl - 3,5,5 - triméthylcyclohexyldiisocyanate, le m-tétraméthylxylylènediisocyanate, le 2,2,4-triméthyl-6 -hexanediisocyanate, aptes à former un trimère d'isocyanate par une réaction de trimérisation en présence d'un catalyseur spécifique, que le mélange réactionnel contenant un catalyseur de trimérisation est déposé par coulée ou pulvérisation sur le support de formation de la couche, et qu'on effectue la réaction de trimérisation sur ledit support, ainsi que la polymérisation de la couche de polyuréthane, par action de la chaleur.

12. Couche de revêtement en polyuréthane obtenue par le procédé selon une des revendications 1 à 11.

13. Feuille en matière plastique de haute qualité optique caractérisée en ce qu'elle comprend la couche de revêtement selon la revendication 12.

14. Vitrage comprenant un support en verre ou en matière plastique, monolithique ou feuilleté caractérisé en ce qu'il utilise une couche de revêtement selon une des revendications 1 à 13.

## Claims

1. Process for the production of a thermosetting polyurethane covering coating having self-healing properties by reactive pouring or spraying of a reaction mixture of a polyol component having a functionality of at least 2 and an isocyanate component, onto a formation support, characterized in that the isocyanate component is essentially a diisocyanate or a mixture of diisocyanates in the form of monomers and chosen from among 1,6-hexamethylene diisocyanate, 3-isocyanatomethyl-3,5,5-trimethyl cyclohexyl diisocyanate, m-tetramethyl xylylene diisocyanate and 2,2,4-trimethyl-6-hexane diisocyanate, able to form an isocyanate trimer by a trimerization reaction in the presence of a specific catalyst, that the reaction mixture containing a trimerization catalyst is deposited by spraying or pouring onto the coating formation support and that the trimerization reaction is performed on said support, as well as the polymerization of the polyurethane coating, by the action of heat.

2. Process according to claim 1, characterized in that trimerization is performed simultaneously or just prior to the polymerization reaction of the coating.

3. Process according to one of the claims 1 and 2, characterized in that the trimerization catalyst is a catalyst giving a triisocyanurate.

4. Process according to one of the claims 1 or 2, characterized in that the trimerization catalyst is a catalyst providing an isocyanate biuret.

5. Process according to any one of the claims 1 to 4, characterized in that the monomeric isocyanate is 1,6-hexamethylene diisocyanate.

6. Process according to claim 3, characterized in that the trimerization catalyst is chosen from among organometallic catalysts, organic acid salts of quaternary ammonium and strong bases.

7. Process according to any one of the claims 1 to 6, characterized in that the polyol component is essentially formed by a polyol with a functionality higher than 2 and which is preferably trifunctional.

8. Process according to one of the claims 1 to 7, characterized in that the reaction mixture also contains an organometallic catalyst appropriate for the polyurethane polymerization reaction.

9. Process according to claim 8, characterized in that the concentration by weight of the trimerization catalyst of the reaction mixture is at least 10 times that of the polymerization catalyst.

10. Process according to one of the claims 1 to 9, characterized in that the polyol component is chosen from among a polyether obtained by the condensation of 1,2-propylene oxide and 2,2-bis(hydroxymethyl)-1-butanol, a polyester polyol based on trimethylol propane, hexane diol, adipic acid and o- and i- phthalic acid, a trifunctional lactone-polyester polyol based on trimethylol propane or glycerol and ε-caprolactone.

11. Process for the production of a two-coating sheet, a polyurethane coating having energy absorbing properties obtained by reactive pouring and a covering coating of thermosetting polyurethane, in which the covering coating is formed first on a formation support and the other coating is formed on the first coating, or conversely the polyurethane coating is formed first, followed by the covering coating, characterized in that the isocyanate component is essentially a diisocyanate or a mixture of diisocyanates in the form of monomers, chosen from among 1,6-hexamethylene diisocyanate, 3-isocyanatomethyl-3,5,5-trimethyl cyclohexyl diisocyanate, m-tetramethyl xylylene diisocyanate and 2,2,4-trimethyl-6-hexane diisocyanate able to form an isocyanate trimer by a trimerization reaction in the presence of a specific catalyst, that the reaction mixture containing a trimerization catalyst is deposited by pouring or spraying on the coating formation support and that the trimerization reaction takes place on said support, as well as the polymerization of the polyurethane coating, by the action of heat.

12. Polyurethane covering coating obtained by the process according to one of the claims 1 to 11.

13. High optical quality, plastics material sheet, characterized in that it comprises the covering coating according to claim 12.

14. Glazing incorporating a monolithic or laminated, plastics material or glass support, characterized in that it uses a covering coating according to one of the claims 1 to 13.

## Patentansprüche

1. Verfahren zur Herstellung einer Überzugsschicht aus duroplastischem Polyurethan mit nach Beschädigung selbstheilenden Eigenschaften durch Reaktionsgießen oder-spritzen eines Reaktionsgemischs aus einer Polyolkomponente mit einer Funktionalität von wenigstens zwei und einer Isocyanatkomponente auf einen Herstellungsträger, **dadurch gekennzeichnet, daß** die Isocyanatkomponente im wesentlichen ein Diisocyanat oder ein Gemisch aus Diisocyanaten in Monomerform ist, die aus 1,6-Hexamethylendiisocyanat, 3-Isocyanatomethyl-3,5,5-trimethylcyclohexylisocyanat, m-Tetramethylxylylendiiso-cyanat und 2,2,4-Trimethyl-6-hexandiisocyanat ausgewählt sind, die in Gegenwart eines speziellen Katalysators durch eine Trimerisationsreaktion ein Isocyanattrimeres bilden können, **daß** das einen Trimerisationskatalysator enthaltende Reaktionsgemisch durch Gießen oder Spritzen auf den Herstellungsträger der Schicht aufgebracht ist **und daß** die Trimerisationsreaktion auf diesem Träger sowie die Polymerisation der Polyurethanschicht unter Wärmeeinwirkung durchgeführt wird.

2. Verfahren nach Anspruch 1**, dadurch gekennzeichnet, daß** die Trimerisation gleichzeitig oder unmittelbar vor der Poly-merisationsreaktion der Schicht durchgeführt wird.

3. Verfahren nach Anspruch 1 oder 2, **dadurch gekennzeichnet, daß** der Trimerisationskatalysator ein ein Triisocyanurat liefernder Katalysator ist.

4. Verfahren nach Anspruch 1 oder 2, **dadurch gekennzeichnet, daß** der Trimerisationskatalysator ein ein Isocyanatbiuret liefernder Katalysator ist.

5. Verfahren nach einem der Ansprüche 1 bis 4, **dadurch gekennzeichnet, daß** das Isocyanatmonomer 1,6-Hexamethylendi-isocyanat ist.

6. Verfahren nach Anspruch 3, **dadurch gekennzeichnet, daß** der Trimerisationskatalysator aus metallorganischen Kataly-satoren, quartären Ammmoniumsalzen organischer Säuren und starken Basen ausgewählt ist.

7. Verfahren nach einem der Ansprüche 1 bis 6, **dadurch gekennzeichnet, daß** die Polyolkomponente im wesentlichen aus einem Polyol mit einer Funktionalität von größer als zwei besteht und vorzugsweise trifunktionell ist.

8. Verfahren nach einem der Ansprüche 1 bis 7, **dadurch gekennzeichnet, daß** das Reaktionsgemisch außerdem einen für die Polymerisationsreaktion des Polyurethans geeigneten Katalysator enthält.

9. Verfahren nach Anspruch 8, **dadurch gekennzeichnet, daß** die Gewichtskonzentration des Trimerisationskatalysators des Reaktionsgemischs wenigstens das Zehnfache der des Polymerisationskatalysators beträgt.

10. Verfahren nach einem der Ansprüche 1 bis 9, **dadurch gekennzeichnet, daß** die Polyolkomponente ausgewählt ist aus einem durch Kondensation von 1,2-Propylenoxid mit 2,2-Bis-(hydroxymethyl)-1-butanol erhaltenen Polyether, einem Polyesterpolyol auf der Grundlage von Trimethylolpropan, Hexandiol, Adipinsäure und o- und i-Phthalsäure und einem trifunktionellen Lacton-Polyesterpolyol auf der Grundlage von Trimethylolpropan oder Glycerin und ε-Caprolacton.

11. Verfahren zur Herstellung einer Folie aus zwei Schichten, einer durch Reaktionsgießen hergestellten Polyurethan-schicht mit energieabsorbierenden Eigenschaften und einer Überzugsschicht aus duroplastischem Polyurethan, in wel-chem zuerst auf einem Herstellungsträger die Überzugs-schicht und darauf die andere Schicht oder umgekehrt zunächst die andere Polyurethanschicht und anschließend die Überzugsschicht gebildet wird, **dadurch gekennzeichnet, daß** die Isocyanatkomponente im wesentlichen ein Diisocyanat oder ein Gemisch aus Diisocyanaten in Monomerform ist, die aus 1,6-Hexamethylendiisocyanat, 3-Isocyanatomethyl-3,5,5-trimethylcyclohexylisocyanat, m-Tetramethylxylylendiisocyanat und 2,2,4-Trimethyl-1,6-hexandiisocyanat ausgewählt sind, die in Gegenwart eines speziellen Katalysators durch eine Trimerisationsreaktion ein Isocyanattrimeres bilden können, **daß** das einen Trimerisationskatalysator enthaltende Reaktionsgemisch durch Gießen oder Spritzen auf den Herstellungsträger der Schicht aufgebracht ist **und daß** die Trimerisationsreaktion auf diesem Träger sowie die Polymerisation der Polyurethanschicht unter Wärmeeinwirkung durchgeführt wird.

12. Überzugsschicht aus Polyurethan, die durch das Verfahren nach einem der Ansprüche 1 bis 11 hergestellt ist.

13. Kunststoffolie mit hoher optischer Qualität, **dadurch ge-kennzeichnet, daß** sie die Überzugsschicht nach Anspruch 12 enthält.

14. Verglasung, die ein Glas- oder Kunststoffträgermaterial aus einem Stück oder einem Verbund umfaßt, **dadurch gekennzeichnet, daß** für sie eine Überzugsschicht nach einem der Ansprüche 1 bis 13 verwendet wird.
